# EUROPÄISCHE PATENTSCHRIFT

(11) **EP 1 524 152 B1**
(45) Veröffentlichungstag und Bekanntmachung des Hinweises auf die Patenterteilung: **30.08.2006**
(21) Anmeldenummer: 04024443.6
(22) Anmeldetag: 14.10.2004
(51) Int. Cl.: B60R 5/04

(54) **Laderaumabdeckung**
Load compartment cover
Volet pour coffre

(30) Priorität: 15.10.2003 DE 10348890
(43) Veröffentlichungstag der Anmeldung: 20.04.2005
(73) Patentinhaber: BOS GmbH & Co. KG, 73760 Ostfildern (DE)
(72) Erfinder: Kobiela, Andreas, 72654 Neckartenzlingen (DE)
(74) Vertreter: Patentanwälte Ruff, Wilhelm, Beier, Dauster & Partner

(56) Entgegenhaltungen:
- EP-A- 0 565 220
- DE-U- 20 013 722
- US-B1- 6 402 217

## Beschreibung

Die Erfindung betrifft eine Laderaumfunktionseinrichtung mit wenigstens einer Funktionsspur, in der wenigstens ein Funktionselement durch wenigstens zwei Funktionspositionen begrenzt längsbeweglich angeordnet ist.

Eine Laderaumfunktionseinrichtung für ein Kraftfahrzeug ist in Form einer horizontal ausziehbaren Laderaumabdeckung allgemein bekannt. Die Laderaumabdeckung weist ein flexibles Flächengebilde auf, das auf einer Wickelwelle auf- und abrollbar angeordnet ist. An seinem in Auszugrichtung vorderen Endbereich weist das Flächengebilde eine Auszugleiste auf, die mit ihren gegenüberliegenden Stirnenden in jeweils einer Führungsschiene längsverschiebbar gehalten ist.

Die US 6,402,217 B1 zeigt eine Laderaumabtrennung mit einem flexiblen Rollo, das in einem ersten Endbereich an einer federvorbelasteten Wickelwelle befestigt ist und an einem zweiten freien Endbereich mit einer quer zu einer Fahrzeuglängsrichtung verlaufenden Auszugstange versehen ist. Für eine Führung der Auszugstange in einem Laderaum eines Kraftfahrzeugs sind beidseitig in Laderaurnwänden des Laderaums jeweils im wesentlichen horizontal verlaufende Führungsschienenabschnitte vorgesehen, die für eine Führung von Endbereichen der Auszugstange in horizontaler Richtung vorgesehen sind. An die horizontal verlaufenden Führungsschienenabschnitte schließen jeweils beidseitig im Wesentlichen vertikal verlaufende Führungsschienenabschnitte an, die sich längs einer Dachsäule des Kraftfahrzeugs erstrecken. An einem Übergang zwischen dem horizontalen Führungsschienenabschnitt und dem vertikalen Führungsschienenabschnitt ist jeweils eine Riegeleinrichtung vorgesehen, die eine Arretierung der Auszugschiene einer horizontalen Funktionsposition ermöglicht. Die Riegeleinrichtung, die jeweils ein integraler Bestandteil der Führungsschienenabschnitte ist, ermöglicht durch eine Hebeleinrichtung, die von einer Kofferraumklappe des Kraftfahrzeugs ansteuerbar ist, eine Umlenkung der Auszugstange von dem horizontalen Führungsschienenabschnitt in den vertikalen Führungsschienenabschnitt. Damit kann eine Kornfortfunktion erzielt werden, bei der das Rollo automatisch bei Öffnen der Kofferraumklappe aus der horizontalen Funktionsposition in eine Komfortposition längs der vertikalen Führungsschienenabschnitte bewegt wird und somit einen komfortablen Zugang zum Laderaum ermöglicht

Aus der DE 200 13 722 U1 geht eine Laderaumabdeckung hervor, bei der eine flexible Werkstoffbahn mit einem endseitig an einem freien Endbereich angebrachten Endbord versehen ist Das Endbord weist ein Griffteil auf, das mit einer Welle, die sich über die Breite des Laderaums erstreckt, gekoppelt ist. Endseitig sind an der Welle jeweils Führungskörper angebracht, die in fahrzeugfesten Führungsschienen verschiebbar angebracht sind und die mit schwenkbeweglichen und federvorbelasteten Sperrzungen versehen sind. Die dem Griffteil zugeordnete Welle ist drehbar in den Führungskörpern gelagert und ist drehfest mit den Sperrzungen verbunden. Die Sperrzungen sind für einen formschlüssigen Eingriff in Aussparungen vorgesehen, die in den Führungsschienen angeordnet sind und die eine Arretierung des Endbords und der damit verbundenen flexiblen Werkstoffbahn in unterschiedlichen Funktionsstellungen ermöglicht.

Die EP 0 565 220 A1 beschreibt eine Laderaumabdeckung mit einem flexiblen Sichtschutz, der auf einer federvorgespannten Wickelwelle aufrollbar ist und der an einem freien Ende mit einer Auszugstange versehen ist. Die Auszugstange ist für einen Eingriff in seitlich an Laderaumwänden vorgesehene Führungsschienen vorgesehen, die für eine Festlegung des Sichtschutzes in vorgegebenen Stellungen gestaltet sind. Dazu sind die Führungsschienen mit verschieden gestalteten Ausnehmungen oder Ausbuchtungen versehen, in die die Auszugstange eingehängt werden kann, um unterschiedliche, aber fest vorgegebene Arretierungsposition einzunehmen.

Aus der DE 199 44 948 C2 ist es bekannt, die Stirnenden der Auszugleisten mit jeweils einem Mitnehmer in der jeweiligen Führungsschiene in Verbindung zu bringen, wobei der Mitnehmer in jeder Führungsschiene durch einen Antrieb längsverschiebbar geführt ist Ein solcher Mitnehmer stellt ein Funktionselement im Sinne der Erfindung dar. Die Blockierung der Ausziehleiste und damit des Flächengebildes in unterschiedlichen Positionen längs der Führungsschienen erfolgt durch entsprechendes Stillsetzen der Antriebseinrichtung für die Mitnehmer.

Aufgabe der Erfindung ist es, eine Laderaumfunktionseinrichtung der eingangs genannten Art zu schaffen, die einen variablen Einsatz ermöglicht.

Diese Aufgabe wird durch die Merkmale des Anspruchs 1 gelöst. An wenigstens einer Funktionsposition der Funktionsspur ist ein Aufnahmebereich zum lösbaren Befestigen eines Blockiermoduls angeordnet das wenigstens ein Blockierelement aufweist, das zwischen einer das Funktionselement fixierenden Blockierposition und einer das Funktionselement für eine Längsbewegung freigebenden Ruheposition beweglich angeordnet ist. Dadurch ist es möglich, der wenigstens einen Funktionsposition wahlweise ein Blockiermodul zuzuordnen oder nicht. Je nach Einsatzzweck kann somit diese Funktionsposition als Blockierposition oder auch als nicht arretierbare Funktionsposition gestaltet werden.

In Ausgestaltung der Erfindung sind über die Länge der Funktionsspur verteilt mehrere Aufnahmebereiche angeordnet, an denen jeweils ein Blockiermodul befestigbar ist. Dadurch ist es möglich, je nach Funktionsund Einsatzzweck wahlweise eine oder mehrere, als Zwischen- oder als Endpositionen gestaltete Funktionspositionen mit einer entsprechenden Blockierfunktion auszurüsten.

In weiterer Ausgestaltung der Erfindung ist jeder Aufnahmebereich tasehen- oder wannenartig ausgebildet. Gemäß der erfindung ist das Blockiemodul derart korrespondierend block- oder rahmenförmig gestaltet, dass es bündig und/oder formschlüssig in den Aufnahmebereich einsetzbar ist. Vorzugsweise sind zwei Funktionsspuren als Führungsschienen an gegenüberliegenden Seitenwandungen eines Laderaumes vorgesehen. Bei einer derartigen Ausführung sind die Aufnahmebereiche vorzugsweise zur Laderaummitte hin offen, so dass das entsprechende Blockiermodul vom Laderaum her in den jeweiligen Aufnahmebereich einsetzbar ist.

In weiterer Ausgestaltung der Erfindung sind lösbare Rastmittel vorgesehen, um das Blockiermodul in dem Aufnahmebereich zu fixieren. Dies ist eine besonders einfache und funktionssichere mechanische Ausführung.

In weiterer Ausgestaltung der Erfindung ist das Blockiermodul spiegelsymmetrisch zu seiner hochgerichteten Mittellängsebene ausgebildet. Dadurch ist es möglich, das Blockiermodul Funktionsspuren auf gegenüberliegenden Fahrzeugseiten zuzuordnen, ohne für die linke bzw. rechte Seite - auf eine Laderaumabdeckung bezogen - unterschiedliche Blockiermodule zu benötigen. Die Blockiermodule für beide Seiten können somit baugleich ausgeführt sein. Die hochgerichtete Mittellängsebene des Blockiermoduls ist in einer Funktionsstellung des Blockiermoduls vorzugsweise vertikal ausgerichtet und entspricht insbesondere der Ebene, in der das Blockierelement beweglich gelagert ist.

In weiterer Ausgestaltung der Erfindung ist das Blockierelement in Richtung seiner Blockierposition mit einem Federmittel kraftbeaufschlagt. Dadurch befindet sich das Blockierelement automatisch in seiner Blockierposition, solange eine Gegenkraft auf das Blockierelement ausgeübt wird. Vorzugsweise ist das Blockierelement als schwenkbeweglich gelagerte Sperrklinke ausgeführt.

In weiterer Ausgestaltung der Erfindung ist das Blockierelement in Bewegungsrichtung des Funktionselementes begrenzt axial beweglich angeordnet. Dadurch ist ein Toleranzausgleich möglich, um eine Blockierung des Funktionselementes auch dann sicher erzielen zu können, wenn das Funktionselement sich nicht exakt in der entsprechend definierten Funktionsposition befindet.

In weiterer Ausgestaltung der Erfindung ist dem Blockierelement ein die axiale Beweglichkeit bremsendes Dämpferelement, insbesondere ein Federelement, zugeordnet. Dadurch wird das Blockierelement unter Vorspannung gehalten, so dass auch bei toleranzbehafteter Funktionsposition des Funktionselementes eine sichere Anlage des Blockierelementes an dem Funktionselement erzielt wird.

In weiterer Ausgestaltung der Erfindung ist ein Steuerelement zum Überführen des Blockierelementes aus seiner Blockierposition in die Ruheposition vorgesehen. Vorzugsweise ist ein manuell betätigbares Steuerelement vorgesehen. Falls das Funktionselement Teil einer Auszugleiste seiner Laderaumabdeckung ist, so ist es möglich, im Bereich der Auszugleiste der Laderaumabdeckung ein manuell bedienbares Betätigungselement vorzusehen, das das Steuerelement in entsprechender Weise bewegt. Alternativ ist es möglich, das Funktionselement selbst begrenzt beweglich zu lagern, um so direkt über das Funktionselement das Blockierelement ansteuern und in seine Ruheposition überführen zu können.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform einer erfindungsgemäßen Laderaumfunktionseinrichtung,
- Fig. 2: in vergrößerter, perspektivischer Darstellung ein Blockiermodul für die Laderaumfunktionseinrichtung nach Fig. 1,
- Fig. 3: in vergrößerter, perspektivischer und teilweise aufgebrochener Darstellung einen Ausschnitt einer weiteren Laderaumfunktionseinrichtung im Bereich eines Blockiermoduls,
- Fig. 4: in schematischer Darstellung einen Ausschnitt einer weiteren Laderaumfunktionseinrichtung, ähnlich Fig. 1 im Bereich eines Blockiermoduls,
- Fig. 5 und 6: das Blockiermodul nach Fig. 4 in unterschiedlichen Funktionsstellungen,
- Fig. 7: in perspektivischer, schematischer Darstellung eine Ausführungsform einer erfindungsgemäßen Laderaumfunktionseinrichtung als Ausschnitt ähnlich Fig. 3,
- Fig. 8: in vergrößerter, perspektivischer Darstellung eine weitere Ausführungsform eines Blockiermoduls und
- Fig. 9: in vergrößerter Längsschnittdarstellung die Blockierung eines Funktionselementes mittels einer Sperrklinke des Blockiermoduls.

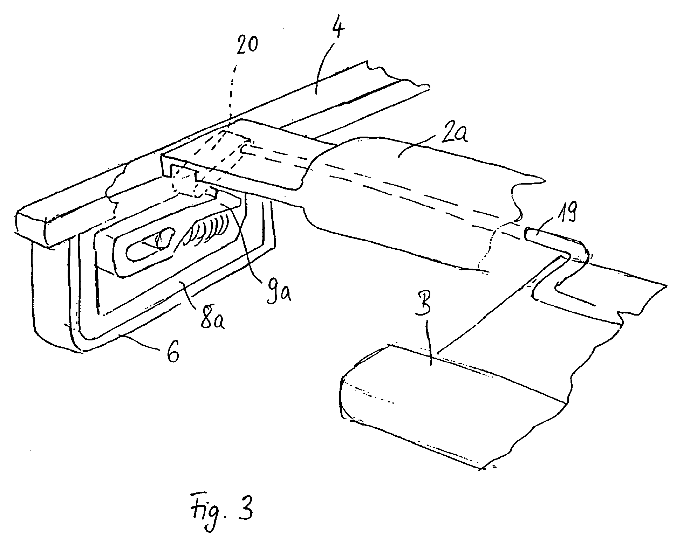

Ein Laderaum eines Kraftfahrzeugs, vorliegend eines Kombi-Personenkraftwagens oder einer Großraumlimousine, weist eine Laderaumfunktionseinrichtung auf, die beim dargestellten Ausführungsbeispiel als Laderaumabdeckung 1, 5 ausgeführt ist. Die Laderaumabdeckung weist ein lediglich schematisch dargestelltes Kassettengehäuse 5 auf, in dem ein flexibles Flächengebilde 1 kompakt, vorzugsweise auf einer Wickelwelle aufgerollt, abgelegt ist. Das Kassettengehäuse 5 ist - in normaler Fahrtrichtung des Kraftfahrzeugs gesehen - in einem vorderen Bereich des Laderaumes unmittelbar hinter einer Rückenlehnenanordnung einer Fondsitzbank positioniert. Das Flächengebilde 1 ist aus der kompakten Ruheposition innerhalb des Kassettengehäuses 5 zu einem Fahrzeugheck knapp unterhalb einer Fahrzeugbordkante etwa horizontal nach hinten ausziehbar. An einem in Ausziehrichtung vorderen Stirnende weist das Flächengebilde 1 eine Auszugleiste 2 auf, die im Bereich ihrer gegenüberliegenden Seiten in jeweils einer als Funktionsspur dienenden Führungsschiene 4 längsverschiebbar angeordnet ist. Der Auszugleiste 2 ist ein formstabiles Konturteil 3 zugeordnet, das fest mit der Auszugsleiste 2 und dem Flächengebilde 1 verbunden ist. Das Konturteil 3 dient dazu, im Bereich einer Heckklappe die entsprechend gewölbte Innenkontur der Heckklappe auszugleichen und im ausgezogenen Zustand der Laderaumabdeckung diesen heckseitigen Endbereich des Laderaumes abzudecken. In einem mittleren Bereich des Konturteiles 3 ist eine Grifföffnung vorgesehen, der zudem - wie in Fig. 3 erkennbar ist - ein nachfolgend näher beschriebenes Betätigungselement zugeordnet ist.

Die beiden Führungsschienen 4 sind im Bereich gegenüberliegender Seitenwandungen des Laderaumes befestigt. Jede Führungsschiene 4 weist ein etwa C-förmiges Querschnittsprofil auf, das jeweils zur Laderaummitte hin offen ist. In die offene Seite jeder Führungsschiene 4 ist das jeweilige Stirnende der Auszugleiste 2 eingesetzt, das gleitbeweglich innerhalb der jeweiligen Führungsschiene 4 verschiebbar ist.

In beiden Führungsschienen sind einander auf gleicher Höhe gegenüberliegend jeweils paarweise insgesamt vier als Aufnahmebereiche dienende Aufnahmetaschen 6 zugeordnet, wobei ein Paar von Aufnahmetaschen 6 etwa in einer mittleren Ausziehposition des Flächengebildes 1 und das andere Paar von Aufnahmetaschen 6 in einer heckseitig ausgezogenen Endposition des Flächengebildes 1 angeordnet ist. Die Auf-nahmetaschen 6 sind unterhalb der jeweiligen Führungsschiene 4 angeordnet, wobei die Aufnahmetaschen 6 zur Laderaummitte hin offen sind und an der jeweiligen Seitenwandung des Laderaumes anliegen. Jede Aufnahmetasche 6 weist im Bereich ihrer Oberseite eine Durchtrittsöffnung 7 in die Führungsschiene 4 hinein auf. Durch diese Durchtrittsöffnung 7 ragt eine als Blockierelement dienende Sperrklinke 9 eines in die jeweilige Aufnahmetasche 6 einsetzbaren Blockiermoduls 8 hindurch, solange die Sperrklinke 9 sich in ihrer Blockierposition befindet. Die Aufnahmetasche könnte einstückig an der jeweiligen Führungsschiene 4 angeformt oder auch als separate Bauteile an dieser befestigt sein.

Jede Aufnahmetasche 6 weist einen etwa rechteckigen freien Querschnitt auf, in den ein quaderartiges Blockiermodul 8 von der Laderaummitte her horizontal einsetzbar ist. Das Blockiermodul 8 ist in seiner Quaderform derart auf den Aufnahmeraum innerhalb jeder Aufnahmetasche 6 abgestimmt, dass das jeweilige Blockiermodul 8 bündig in die Aufnahmetasche 6 einsetzbar und in dieser lösbar befestigbar ist.

Beim dargestellten Ausführungsbeispiel weist ein quaderartiges Gehäuse 10 des Blockiermoduls 8 zwei nutartige Winkelaussparungen 12 auf, die auf nicht näher dargestellte Winkelstege innerhalb der Aufnahmetaschen 6 beim Einsetzen des Blockiermoduls 8 aufsteckbar sind. In nicht näher dargestellter Weise sind Rastmittel oder anders gestaltete Befestigungsmittel vorgesehen, die das Blockiermodul in seinem eingesetzten Zustand in der jeweiligen Aufnahmetasche fixieren. Die Rastmittel bzw. die anders gestalteten Befestigungsmittel sind lösbar ausgeführt, um eine erneute Demontage des Blockiermoduls zu ermöglichen. Auch die Blockiermodule 8 treten - wie die Aufnahmetaschen 6 - jeweils paarweise in Funktion. Für die beiden Führungsschienen 4 sind somit wenigstens zwei einander gegenüberliegende Blockiermodule vorgesehen.

Das Gehäuse 10 ist rahmenartig gestaltet. Das Gehäuse 10 wie auch alle weitere Teile des Blockiermoduls 8 sind spiegelsymmetrisch zu einer - auf den Funktionszustand des Blockiermoduls bezogen - vertikalen Mittellängsebene des Blockiermoduls 8 ausgeführt. Dadurch ist es möglich, jedes Blockiermodul als Gleichteil sowohl links- als auch rechtsseitig in den gegenüberliegenden Führungsschienen 4 einzusetzen. Alle Blockiermodule 8 sind somit identisch ausgeführt und können wahlweise links- oder rechtsseitig eingesetzt werden. Die Seitenwandungen des Blockiermoduls 8 werden durch lösbare Deckel 11 gebildet, wie anhand der Fig. 2 erkennbar ist.

Die Sperrklinke 9 ragt durch eine Aussparung 13 im Bereich einer Oberseite des Gehäuses 10 hindurch und ist im Inneren des Gehäuses 10 auf einer Querbuchse 14, die zusätzlich zur Befestigung des Deckels 11 dient, um eine in der Funktionsposition in Fahrzeugquerrichtung ausgerichtete Achse zum einen schwenkbeweglich gelagert. Zum anderen ist eine Lageraufnahme, mittels der die Sperrklinke 9 auf der Querbuchse 14 gehalten ist, als Langloch 15 ausgeführt, um zusätzlich eine begrenzte Längsbeweglichkeit der Sperrklinke 9 in Fahrzeuglängsrichtung, d.h. parallel zu der jeweiligen Führungsschiene 4, zu ermöglichen Die Aussparung 13 ist in ihrer Länge größer als die korrespondierende Längserstreckung der Sperrklinke 9 ausgeführt, um die durch das Langloch 15 vorgegebene begrenzte Längsbeweglichkeit der Sperrklinke 9 nicht einzuschränken. Die Sperrklinke 9 ist zudem mit einem Anschlagsteg 18 versehen, der in einem unteren Randbereich der Aussparung 13 an einer inneren Gehäusewandung des Gehäuses 10 anliegt. Der Anschlagsteg 18 ist so weit längserstreckt, dass sich auch bei einer sich in einer hinteren Endposition befindenden Sperrklinke 9 relativ zu dem Gehäuse 10 eine Anlage im Bereich der Unterseite der Aussparung 13 ergibt.

Die Sperrklinke 9 ist zudem schräg von unten her durch eine als Federmittel dienende Druckfeder 16 in Richtung ihrer Blockierposition kraftbeaufschlagt. Die Druckfeder 16 dient dazu, die Sperrklinke 9 in ihrer Blockierposition zu halten. Da die Druckfeder 16 sowohl schräg nach unten als auch schräg nach vorne ausgerichtet ist, dient sie zum einen zur Sicherung und Stützung der Sperrklinke 9 in ihrer nach oben verschwenkten Blockierposition. Zum anderen drückt die Druckfeder 16 die Sperrklinke 9 im unbelasteten Zustand auch in die an einem hinteren Randbereich der Aussparung 13 anliegende rückseitige Endposition.

Die Sperrklinke 9 ist in ihrer in Fig. 2 dargestellten Blockierposition mit einer etwa vertikal nach oben ausgerichteten Anschlagfläche versehen, die in die Führungsschiene 4 hineinragt. Zudem fällt die Oberseite der Sperrklinke 9 in Fahrzeuglängsrichtung nach vorne schräg ab, so dass sich eine Anlaufschräge gemäß Fig. 2 ergibt, sobald von vorne her ein Seitenbereich der Auszugleiste 2 die Sperrklinke 9 überfährt. Bei einem Ausziehen der Auszugleiste 2 und des Flächengebildes 1 bewirkt das Überfahren der Sperrklinke 9 zwangsläufig ein Nachuntendrücken der Sperrklinke 9 in eine Freigabeposition. Sobald die Auszugleiste 2 die Sperrklinke 9 überfahren hat, drückt die Druckfeder 16 die Sperrklinke 9 zurück in die Blockierposition. Wenn nun eine Rückholfederanordnung innerhalb des Kassettengehäuses 5 das Flächengebilde 1 wieder zurückziehen will, sobald die manuelle Zugkraft auf die Auszugleiste 2 weggenommen ist, schlägt die Auszugleiste 2 mit ihren Stirnendbereichen zwangsläufig an der jeweiligen Anlauffläche der Sperrklinke 9 an und wird in dieser Funktionsposition blockiert.

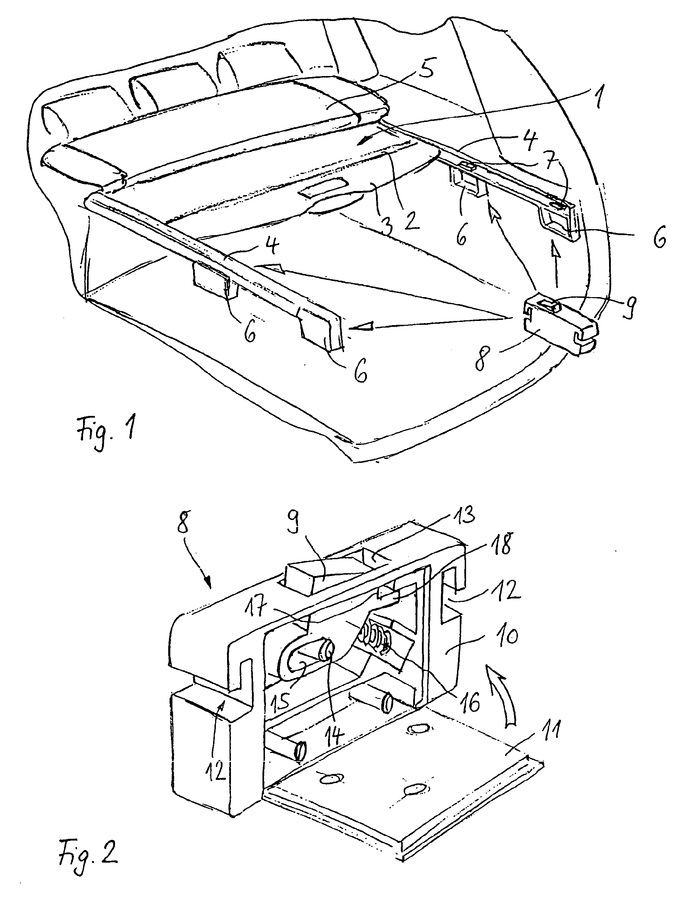

Um die jeweilige Sperrklinke 9 jedes Blockiermoduls 8 in den gegenüberliegenden Führungsschienen 4 bei Bedarf wieder lösen zu können, um einen Rückzug des Flächengebildes 1 in seine kompakte Ruheposition innerhalb des Kassettengehäuses 5 zu ermöglichen, ist gemäß Fig. 3 jeder Sperrklinke ein Steuerelement zugeordnet, das durch ein manuell bedienbares Betätigungselement B beweglich ist. Bei der Ausführungsform nach Fig. 3 ist die Sperrklinke 9 geringfügig anders gestaltet. Von ihrem grundsätzlichen Aufbau und ihrer grundsätzlichen Funktion her entspricht jedoch das Blockiermodul 8a gemäß Fig. 3 der Ausführungsform nach den Fig. 1 und 2. Ein Steuerelement wie auch ein Betätigungselement können daher in gleicher Weise zum Lösen der Sperrklinke 9 nach Fig. 1 und 2 eingesetzt werden wie bei der Ausführungsform nach Fig. 3. Die nachfolgende Beschreibung gilt daher für beide Ausführungsformen.

Jedes Steuerelement 20 wird durch einen Steuerhebel gebildet, der an einer durch die Länge der Auszugleiste 2a verlaufenden Steuerwelle 19 drehfest angeordnet ist. Die Steuerwelle 19 ist innerhalb der Auszugleiste 2a um eine in Fahrzeugquerrichtung verlaufende Drehachse schwenkbeweglich gelagert. In einem mittleren Bereich greift an der Steuerwelle 19 das Betätigungselement B hebelartig an, so dass eine durch das Betätigungselement B auf die Steuerwelle 19 ausgeübte Schwenkbewegung zu einer korrespondierenden Schwenk- oder Kippbewegung beider Steuerelemente 20 an den gegenüberliegenden Stirnenden der Auszugleiste 2a führt. Dadurch, dass beide Steuerelemente 20, d.h. die Steuerhebel, an einer gemeinsamen Steuerwelle 19 befestigt sind, wird zwangsläufig eine synchrone Bewegung der gegenüberliegenden Steuerhebel 20 bewirkt. Der Steuerwelle 19 und/oder dem hebelartigen Betätigungselement B ist in nicht näher dargestellter Weise eine Rückstellfeder zugeordnet, die die Steuerhebel 20 in der nicht belasteten Position des Betätigungselementes B in einer oberen, mit der Kontur der Auszugleiste 2a fluchtenden Ruhelage hält. Die Steuerhebel 20 sind so relativ zu der Auszugleiste 2, 2a bzw. relativ zu der Sperrklinke 9, 9a angeordnet (in Fig. 3 nicht erkennbar), dass der jeweilige Steuerhebel 20 auf die Anlaufschräge der jeweiligen Sperrklinke 9 einwirkt, sobald er nach unten gedrückt wird. Hierdurch wird die Sperrklinke 9 nach unten gedrückt und gibt das jeweilige Stirnende der Auszugleiste 2, 2a für eine Längsbewegung und damit eine Rückholbewegung des Flächengebildes 1 frei.

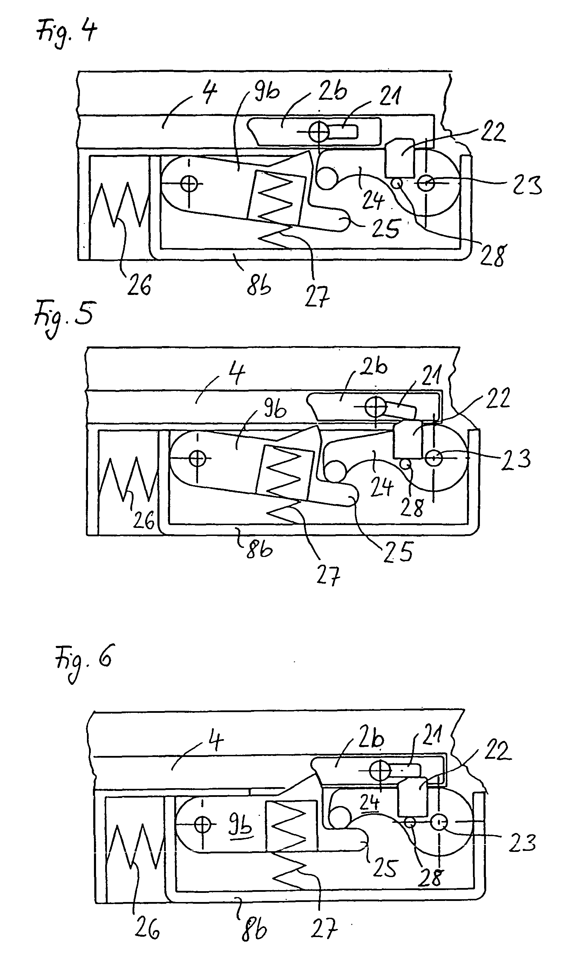

Bei der Ausführungsform nach den Fig. 4 bis 6 dient eine Sperrklinke 9b innerhalb eines Blockiermoduls 8b dazu, ein stirnseitiges Ende einer Auszugleiste 2b in einer Führungsschiene 4 zu blockieren bzw. freizugeben. Bei dieser Ausführungsform ist die Sperrklinke 9b innerhalb des Blockiermoduls 8b lediglich schwenkbeweglich gelagert, ohne dass die Sperrklinke 9b zusätzlich eine Axialbeweglichkeit aufweist. Allerdings ist das gesamte Blockiermodul 8b parallel unterhalb der Führungsschiene 4 begrenzt längsbeweglich. Hierzu ist eine nicht näher bezeichnete Aufnahmetasche mit einer Längserstreckung versehen, die größer ist als eine Längserstreckung des Gehäuses des Blockiermoduls 8b. Zudem ist innerhalb der Aufnahmetasche ein Federmittel 26 vorgesehen, das eine Dämpfungs- und Toleranzausgleichsfunktion durchführt entsprechend der zuvor beschriebenen Ausführung der Druckfeder 16 gemäß Fig. 2. Der Sperrklinke 9b ist eine Rückstellfeder 27 zugeordnet, die ohne Axialkomponente lediglich in Fahrzeughochrichtung ausgerichtet ist. Um auch die Sperrklinke 9b aus ihrer die Auszugleiste 2b fixierenden Blockierposition gemäß Fig. 6 in eine Freigabeposition zu überführen, ist analog der Ausführungsform nach Fig. 3 eine nicht näher bezeichnete Steuerwelle innerhalb der Auszugleiste 2b vorgesehen, an deren gegenüberliegenden Stirnenden jeweils ein Steuerhebel 21 vorgesehen ist. Innerhalb des Blockiermoduls 8b ist ein vertikal beweglicher Schieber 22 gelagert, der auf einen Anschlagzapfen 28 einer Auslöseklinke 24 wirkt. Die Auslöseklinke 24 ist um eine Schwenkachse 23, die parallel zur Schwenkachse der Sperrklinke 9b ausgerichtet ist, schwenkbeweglich gelagert. Allerdings ist der Schwenksinn der Auslöseklinke 24 entgegengesetzt zum Schwenksinn der Sperrklinke 9b. Die Sperrklinke 9b weist einen Steuerfortsatz 25 auf, der mit einer Steuernase der Auslöseklinke 24 zusammenwirkt, sobald die Auslöseklinke 24 mittels des Steuerhebeis 21 betätigt wird. Der Auslöseklinke 24 ist in nicht näher dargestellter Weise eine Rückstellfeder zugeordnet, die die Auslöseklinke 24 und damit auch den Schieber 22 in unbelastetem Zustand in die Ausgangslage gemäß Fig. 4 zurückführt.

Sobald nun in der arretierten Blockierposition der Auszugleiste 2b gemäß Fig. 6 für ein Zurückziehen des Flächengebildes in seine kompakte Ruheposition eine Freigabe der Auszugleiste 2b erforderlich wird, wird manuell mittels der Kraftbeaufschlagung eines Betätigungselementes B analog Fig. 3 die Steuerwelle verdreht, wodurch die Steuerhebel 21 (Fig. 6) die Schieber 22 nach unten drücken (Fig. 5). Dadurch wird die Auslöseklinke 24 zwangsläufig nach unten verschwenkt. Gleichzeitig drückt die Auslöseklinke 24 über den Steuerfortsatz 25 auch die Sperrklinke 9b nach unten, so dass die Sperrklinke 9b sich aus der Führungsschiene 4 nach unten zurückzieht. Wie anhand der Fig. 4 und 5 erkennbar ist, ist die Auszugleiste 2b nun frei und kann längs der Führungsschiene 4 in Fahrzeuglängsrichtung nach vorne verschoben werden. Sobald die Auszugleiste 2b sich von dem Blockiermodul 8b entfernt hat, werden die Auslöseklinke 24 wie auch die Sperrklinke 9b durch die entsprechenden Rückstellfedern in ihre obere Ausgangslage (Fig. 6) zurückgestellt. Falls nun die Auszugleiste 2b wieder ausgezogen wird und die Sperrklinke 9b überfährt, wird wieder die Funktionsposition gemäß Fig. 6 erreicht, so dass der Löse- oder Freigabevorgang wiederholt werden kann.

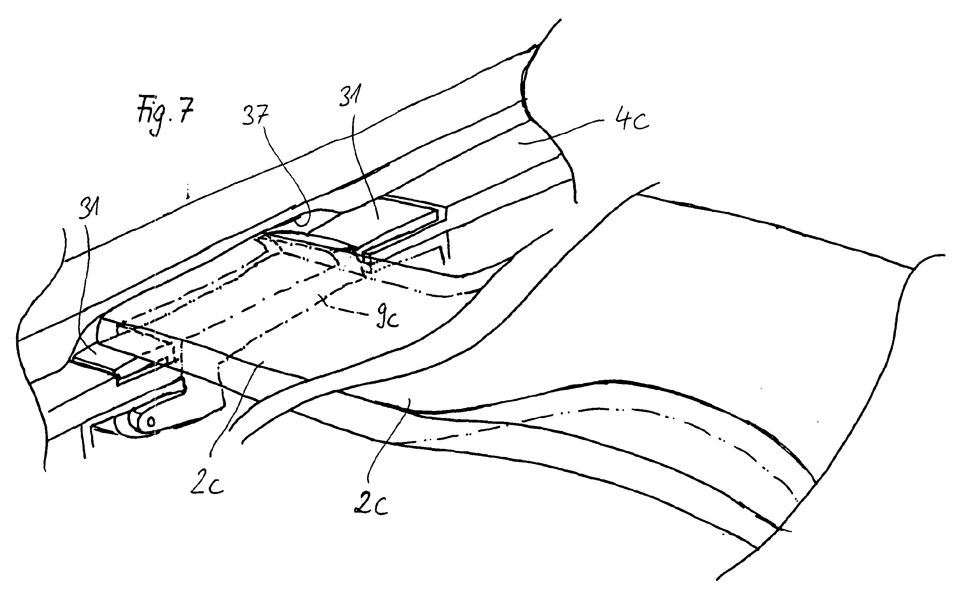

Die Ausführungsform einer Laderaumfunktionseinrichtung gemäß den Fig. 7 bis 9 ist ebenfalls Teil einer Laderaumabdeckung, wie sie anhand der vorangegangenen Ausführungsformen bereits ausführlich beschrieben wurde. Bezüglich der Offenbarung der Laderaumfunktionseinrichtung nach den Fig. 7 bis 9 wird auf die Offenbarung der anhand der Fig. 1 bis 6 beschriebenen Ausführungsformen verwiesen. Funktionsgleiche Bauteile sind mit den gleichen Bezugszeichen unter Hinzufügung des Buchstabens c versehen. Nachfolgend wird lediglich auf die erfindungswesentlichen Unterschiede der Ausführungsformen nach den Fig. 7 bis 9 gegenüber den zuvor beschriebenen Ausführungsformen eingegangen. Auch bei der Ausführungsform nach den Fig. 7 bis 9 sind an gegenüberliegenden Seitenwandungen des Laderaumes Führungsschienen 4c vorgesehen, denen Aufnahmetaschen für die lösbare Aufnahme von Blockiermodulen 8c zugeordnet sind. Eine Auszugleiste 2c der Laderaumabdeckung ist durch eine formstabile Konturplatte gebildet, die sich über die Breite der Laderaumabdeckung erstreckt und an den gegenüberliegenden Stirnendbereichen als Führungselement jeweils einen einstückig an der Konturplatte angeformten, als Leisten- oder Flachprofil ausgeführten Führungsfortsatz aufweisen. Die Höhe der Führungsschiene 4c ist so gestaltet, dass der jeweilige Führungsfortsatz der Konturplatte axial gleitbeweglich in einer entsprechenden Nut der Führungsschiene 4c verschiebbar ist.

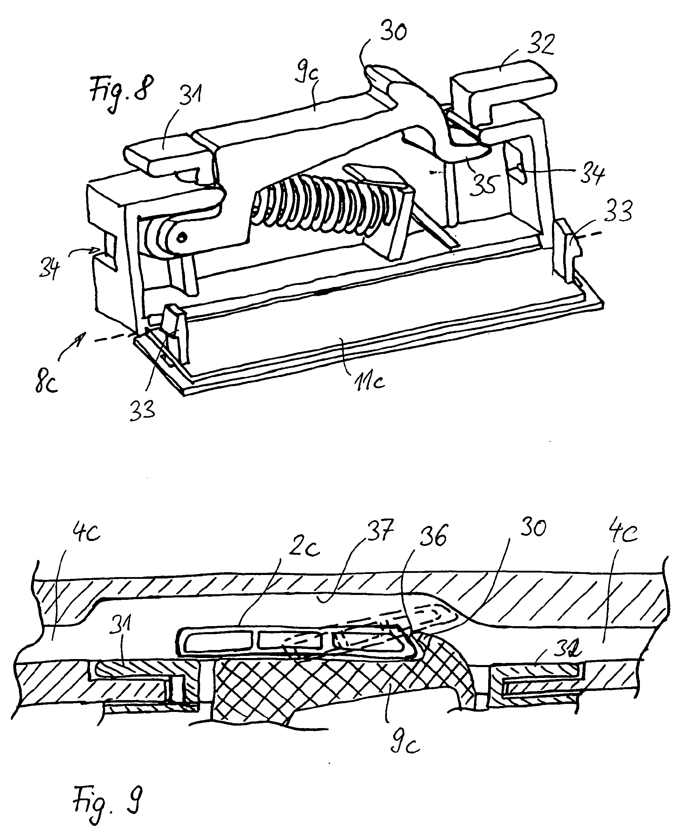

Die Sperrklinke 9c jedes Blockiermoduls weist eine Stütznase 30 auf, die als Hinterschnitt gegenüber einer keilförmig schräggestellten Anlagefläche 36 des jeweiligen Führungsfortsatzes der Auszugleiste 2c gestaltet ist. Anhand der Fig. 8 und 9 ist gut erkennbar, dass die Stütznase 30 die keilförmige Anlagefläche 36 sowohl axial abstützt als auch radial oberhalb der Keilfläche eine zusätzliche Stützung bietet, um ein einfaches Abgleiten des Führungsfortsatzes der Auszugleiste 2c nach oben zu verhindern. Die Gestaltung des Hinterschnittes und der keilförmigen Anlagefläche 36 ist der Fig. 9 gut entnehmbar.

Um die Sperrklinke 9c zu entriegeln und die Führungsfortsätze der Auszugleiste 2c für eine Längsbewegung innerhalb der Führungsschienen 4c freizugeben, wird in einfacher Weise die Auszugleiste, d.h. die Konturplatte, um ihre in Fahrzeugquerrichtung verlaufende Längsachse geringfügig gekippt oder schräggestellt, wodurch zwangsläufig auch der Führungsfortsatz in die Führungsschiene 4c schräg nach oben gedrückt wird. Der nötige Freiraum für eine Kipp- oder Schwenkbewegung der Auszugleiste und der Führungsfortsätze nach oben wird durch Aussparungen 37 auf Höhe jedes Blockiermoduls gebildet, die in der Führungsschiene 4c gemäß Fig. 9 oder 7 angeordnet sind. Eine Schwenkbewegung der Führungsfortsätze und der Auszugleiste um ihre in Fahrzeugquerrichtung erstreckte Längsachse führt dazu, dass die keilförmige Anlagefläche 36 gewaltsam an der Stütznase 30 der Sperrklinke 9c nach oben vorbeigedrückt wird, wobei gleichzeitig die sowohl axiale Beweglichkeit als auch die Schwenkbeweglichkeit der Sperrklinke 9c zu einem gewissen Ausweichen der Sperrklinke 9c führt. Durch die Rückholkraft der Rückholfeder, die auf die Laderaumabdeckung wirkt, wird die Auszugleiste nach oben über die Stütznase 30 gezogen und gleitet an dem Übergang der Aussparung 37 in den nutförmigen Führungsabschnitt der Führungsschiene 4c entlang wieder nach unten. Dabei wird die Sperrklinke 9c in ihrer Freigabeposition nach unten gedrückt. Das Vorsehen eines zusätzlichen Steuerelementes, wie es anhand der Fig. 4 bis 6 vorgesehen war, entfällt bei dieser Ausführung. Die Stütznase 30 dient dazu, dass die Führungsfortsätze und damit die Auszugleiste bzw. die Konturplatte nicht bereits durch das Eigengewicht der Konturplatte nach oben geschwenkt werden und somit frei kommen. Die Stütznase 30 in Verbindung mit der keilförmigen Anlagefläche 36 bildet radial zu der Längsbewegungsachse der Auszugleiste nach oben einen Rückhalt, der erst durch größere Belastungen, wie insbesondere einen manuellen Druck von oben auf die Konturplatte, überwunden wird.

Die Sperrklinke 9c wird durch Federkraft in ihrer Blockierposition gehalten und ist entsprechend den zuvor beschriebenen Ausführungsformen axial begrenzt beweglich gelagert. Zur Begrenzung der Schwenkbeweglichkeit der Sperrklinke 9c nach oben und damit für eine definierte Ausrichtung der Blockierposition ist in Verlängerung der Sperrklinke 9c ein Anschlag 35 vorgesehen, der sich innenseitig an dem Blockiermodul abstützt. Das Blockiermodul weist Befestigungsnasen 31, 32 auf, die in entsprechende Aussparungen im Bereich der Führungsschiene von der Seite her einschiebbar sind und so die lösbare Befestigung des Blockiermoduls im Bereich der Führungsschiene 4c gewährleisten. Durch diese Befestigungsmöglichkeit kann auf das Vorsehen von Aufnahmeteilen im Bereich der Führungsschienen verzichtet werden. Vielmehr müssen die Führungsschienen 4c jeweils auf Höhe der Ausnehmungen 37 lediglich Aussparungen im Bereich einer Bodenfläche der Führungsbahn der jeweiligen Führungsschiene 4c aufweisen, in die das jeweilige Blockiermodul 8c mit seinen Befestigungsnasen 31, 32 von der Seite her einsteckbar ist.

Um eine Montage und Demontage der Sperrklinke 9c und der zugehörigen Druckfeder zu ermöglichen, weist das Blockiermodul 8c einen Deckel 11 c auf, der mit Hilfe von Rastnasen 33 an korrespondierenden Rastaussparungen 34 eines Gehäuses des Blockiermoduls 8c befestigbar ist. Der Deckel 11c ist mittels eines Filmscharniers im Bereich einer Unterseite des Gehäuses an dem Blockiermodul 8c einstückig angelenkt und somit unverlierbar an dem Blockiermodul 8c gehalten.

## Patentansprüche

1. Laderaumfunktionseinrichtung mit wenigstens einer Funktionsspur, in der wenigstens ein Funktionselement durch wenigstens zwei Funktionspositionen begrenzt längsbeweglich angeordnet ist,
**dadurch gekennzeichnet , dass**
an wenigstens einer Funktionsposition der Funktionsspur (4) ein Aufnahmebereich (6) zum lösbaren Befestigen eines Blockiermoduls (8, 8a, 8b) angeordnet ist, das wenigstens ein Blockierelement (9, 9a, 9b) aufweist, das in dem im Aufnahmebereich (6) befestigten Zustand des Blockiermoduls (8, 8a, 8b) zwischen einer das Funktionselement (2, 2a, 2b) fixierenden Blockierposition und einer das Funktionselement für eine Längsbewegung freigebenden Ruheposition beweglich angeordnet ist
und dass das Blockiermodul (8, 8a, 8b) derart korrespondierend block- oder rahmenförmig gestaltet ist, dass es bündig und/oder formschlüssig in den Aufnahmebereich (6) einsetzbar ist.

2. Laderaumfunktionseinrichtung nach Anspruch 1, **dadurch gekennzeichnet, dass** über die Länge der Funktionsspur (4) verteilt mehrere Aufnahmebereiche (6) angeordnet sind, an denen jeweils ein Blockiermodul (8) befestigbar ist.

3. Laderaumfunktionseinrichtung nach Anspruch 1 oder 2, **dadurch gekennzeichnet, dass** jeder Aufnahmebereich (6) taschen- oder wannenartig ausgebildet ist.

4. Laderaumfunktionseinrichtung nach Anspruch 1, **dadurch gekennzeichnet, dass** die Funktionsspur als Führungsschiene (4) für eine ein Funktionselement (2, 2a, 2b) aufweisende Laderaumabdeckung ausgebildet ist, wobei zwei Funktionsspuren (4) auf gegenüberliegenden Seiten der Laderaumabdeckung vorgesehen sind.

5. Laderaumfunktionseinrichtung nach Anspruch 1, **dadurch gekennzeichnet, dass** lösbare Rastmittel vorgesehen sind, um das Blockiermodul (8) in dem Aufnahmebereich (6) zu fixieren.

6. Laderaumfunktionseinrichtung nach Anspruch 1, **dadurch gekennzeichnet, dass** das Blockiermodul (8) spiegelsymmetrisch zu seiner hochgerichteten Mittellängsebene ausgebildet ist.

7. Laderaumfunktionseinrichtung nach Anspruch 1, **dadurch gekennzeichnet, dass** das Blockierelement (9, 9a, 9b) in Richtung seiner Blockierposition mit einem Federmittel (16, 27) kraftbeaufschlagt ist.

8. Laderaumfunktionseinrichtung nach Anspruch 7, **dadurch gekennzeichnet, dass** das Blockierelement (9, 9a, 9b) als schwenkbeweglich gelagerte Sperrklinke ausgeführt ist.

9. Laderaumfunktionseinrichtung nach Anspruch 8, **dadurch gekennzeichnet, dass** das Blockierelement (9, 9a, 9b) in Bewegungsrichtung des Funktionselementes (2, 2a, 2b) begrenzt axial beweglich angeordnet ist.

10. Laderaumfunktionseinrichtung nach Anspruch 9, **dadurch gekennzeichnet, dass** dem Blockierelement (9, 9a, 9b) ein die axiale Beweglichkeit bremsendes Dämpferelement (16, 26), insbesondere ein Federelement, zugeordnet ist.

11. Laderaumfunktionseinrichtung nach Anspruch 1, **dadurch gekennzeichnet, dass** ein Steuerelement (20, 21) zum Überführen des Blockierelementes (9a, 9b) aus seiner Blockierposition in die Ruheposition vorgesehen ist.

12. Laderaumfunktionseinrichtung nach Anspruch 11, **dadurch gekennzeichnet, dass** das Steuerelement (20, 21) dem Funktionselement (2a, 2b) zugeordnet ist.

13. Laderaumfunktionseinrichtung nach Anspruch 8, **dadurch gekennzeichnet, dass** die Sperrklinke (9c) eine einen Hinterschnitt für das Funktionselement (2c) bildende Stütznase (30) aufweist.

14. Laderaumfunktionseinrichtung nach Anspruch 1, **dadurch gekennzeichnet, dass** das Funktionselement (2c) begrenzt beweglich gelagert ist, um relativ zu dem Blockierelement (9c) aus einer Blockierstellung in eine Freigabestellung überführt zu werden.

## Claims

1. Functional load compartment device having at least one functional track in which at least one functional element is arranged to be movable longitudinally between at least two functional positions,
**characterised in that**
at at least one functional position of the functional track (4) there is provided a receiving region (6) for releasably securing a locking module (8, 8a, 8b) having at least one locking element (9, 9a, 9b) which is arranged to be movable, when the locking module (8, 8a; 8b) is secured in the receiving region (6), between a locking position, in which the functional element (2, 2a, 2b) is fixed, and a rest position, in which the functional element is released for longitudinal movement,
and **in that** the locking module (8, 8a, 8b) is correspondingly block- or frame-shaped so that it can be inserted into the receiving region (6) in a flush and/or interlocking manner.

2. Functional load compartment device according to claim 1, **characterised in that** there are provided a plurality of receiving regions (6) distributed over the length of the functional track (4), to each of which receiving regions (6) a locking module (8) can be secured.

3. Functional load compartment device according to claim 1 or 2, **characterised in that** each receiving region (6) is in the form of a pocket or trough.

4. Functional load compartment device according to claim 1, **characterised in that** the functional track is in the form of guide rails (4) for a load compartment cover having a functional element (2, 2a, 2b), two functional tracks (4) being provided on opposite sides of the load compartment cover.

5. Functional load compartment device according to claim 1, **characterised in that** releasable snap-in means are provided for fixing the locking module (8) in the receiving region (6).

6. Functional load compartment device according to claim 1, **characterised in that** the locking module (8) is mirror-symmetrical with respect to its upwardly oriented median longitudinal plane.

7. Functional load compartment device according to claim 1, **characterised in that** the locking element (9, 9a, 9b) is biased in the direction towards its locking position by a spring means (16, 27).

8. Functional load compartment device according to claim 7, **characterised in that** the locking element (9, 9a, 9b) is in the form of a pivotably mounted catch.

9. Functional load compartment device according to claim 8, **characterised in that** the locking element (9, 9a, 9b) is arranged for limited axial movement in the direction of movement of the functional element (2, 2a, 2b).

10. Functional load compartment device according to claim 9, **characterised in that** a damping element (16, 26), especially a spring element, that reduces the axial movability is associated with the locking element (9, 9a, 9b) .

11. Functional load compartment device according to claim 1, **characterised in that** a control element (20, 21) is provided for transferring the locking element (9a, 9b) from its locking position into the rest position.

12. Functional load compartment device according to claim 11, **characterised in that** the control element (20, 21) is associated with the functional element (2a, 2b).

13. Functional load compartment device according to claim 8, **characterised in that** the catch (9c) has a support projection (30) that forms an undercut for the functional element (2c).

14. Functional load compartment device according to claim 1, **characterised in that** the functional element (2c) is mounted for limited movability in order to be transferred, relative to the locking element (9c), from a locking position to a release position.

## Revendications

1. Dispositif fonctionnel pour volume de chargement comprenant au moins une voie fonctionnelle dans laquelle est disposé au moins un élément fonctionnel en déplacement longitudinal limité par au moins deux positions fonctionnelles,
**caractérisé en ce que**
dans au moins une position fonctionnelle de la voie fonctionnelle (4) est disposée une zone de logement (6) pour la fixation amovible d'un module de blocage (8, 8a, 8b) qui présente au moins un élément de blocage (9, 9a, 9b) qui, à l'état fixé dans la zone de logement (6) du module de blocage (8, 8a, 8b), est disposé de manière mobile entre une position de blocage fixant l'élément fonctionnel (2, 2a, 2b) et une position de repos autorisant un mouvement longitudinal de l'élément fonctionnel, et
le module de blocage (8, 8a, 8b) présente une forme de bloc ou de cadre lui permettant d'être inséré à fleur et/ou par complémentarité de formes dans la zone de logement (6).

2. Dispositif fonctionnel pour volume de chargement selon la revendication 1, **caractérisé en ce que** plusieurs zones de logement (6) sont disposées sur la longueur de la voie fonctionnelle (4) auxquelles on peut respectivement fixer un module de blocage (8).

3. Dispositif fonctionnel pour volume de chargement selon la revendication 1 ou 2, **caractérisé en ce que** chaque zone de logement (6) se présente sous la forme d'une poche ou d'une cuve.

4. Dispositif fonctionnel pour volume de chargement selon la revendication 1, **caractérisé en ce que** la voie fonctionnelle est un rail de guidage (4) pour une couverture de volume de chargement présentant un élément fonctionnel (2, 2a, 26), deux voies fonctionnelles (4) étant prévues sur des faces de la couverture de volume de chargement tournées l'une vers l'autre.

5. Dispositif fonctionnel pour volume de chargement selon la revendication 1, **caractérisé en ce que** des moyens d'arrêt amovibles sont prévus pour fixer le module de blocage (8) dans la zone de logement (6).

6. Dispositif fonctionnel pour volume de chargement selon la revendication 1, **caractérisé en ce que** le module de blocage (8) est formé de manière asymétrique par rapport à son plan longitudinal médian vertical.

7. Dispositif fonctionnel pour volume de chargement selon la revendication 1, **caractérise en ce que** dans la direction de sa position de blocage, l'élément de blocage (9, 9a, 9b) est sollicité par force par un moyen de ressort (16, 27).

8. Dispositif fonctionnel pour volume de chargement selon la revendication 7, **caractérisé en ce que** l'élément de blocage (9, 9a, 9b) est un cliquet d'arrêt mobile en pivotement.

9. Dispositif fonctionnel pour volume de chargement selon la revendication 8, **caractérisé en ce que** l'élément de blocage (9, 9a, 9b) est disposé en déplacement axial limité dans la direction de déplacement de l'élément fonctionnel (2, 2a, 2b).

10. Dispositif fonctionnel pour volume de chargement selon la revendication 9, **caractérise en ce qu'**a l'élément de blocage (9, 9a, 9b) est associé un élément d'amortissement (16, 26), en particulier un élément de ressort, freinant la mobilité axiale. qu'à l'élément de blocage (9, 9a, 9b) est associé un élément d'amortissement (16, 26), en particulier un élément élastique, freinant la mobilité axiale.

11. Dispositif fonctionnel pour volume de chargement selon la revendication 1, **caractérisé en ce qu'**un élément de commande (20, 21) est prévu pour transférer l'élément de blocage (9a, 9b) de sa position de blocage dans la position de repos.

12. Dispositif fonctionnel pour volume de chargement selon la revendication 11, **caractérisé en ce que** l'élément de commande (20, 21) est associé à l'élément fonctionnel (2a, 2b).

13. Dispositif fonctionnel pour volume de chargement selon la revendication 8, **caractérisé en ce que** le cliquet d'arrêt (9c) présente un tenon d'appui (30) formant une contre-dépouille pour l'élément fonctionnel (2c) .

14. Dispositif fonctionnel pour volume de chargement selon la revendication 1, **caractérisé en ce que** l'élément fonctionnel (2c) n'est mobile que de façon limitée pour pouvoir être transféré par rapport à l'élément de blocage (9c) d'une position de blocage dans une position de dégagement.
